# EUROPEAN PATENT SPECIFICATION

(11) **EP 2 311 704 B1**
(45) Date of publication and mention of the grant of the patent: **27.02.2013**
(21) Application number: 09173237.0
(22) Date of filing: 16.10.2009
(51) Int. Cl.: B60T 8/50, B62L 3/00

(54) **Braking system for motorcycle**
Bremssystem für ein Motorrad
Système de freinage pour motocyclette

(43) Date of publication of application: 20.04.2011
(73) Proprietor: Yamaha Hatsudoki Kabushiki Kaisha, Iwata-shi, Shizuoka 438-8501 (JP); Continental Automotive Corporation, Yokohama-city Kanagawa 221-0031 (JP); Continental Teves AG & Co. OHG, 60488 Frankfurt (DE)
(72) Inventor: Kajiwara, Kunio, Iwata-shi, Shizuoka 438-8501 (JP); Kusano, Taishi, Asahi-city, Chiba 289-2505 (JP); Uchida, Takanori, Yokohama-city, Kanagawa 221-0031 (JP); Kremer, Michael, 64846, Groß-Zimmern (DE); Meixner, Michael, 60320, Frankfurt am Main (DE); Seto, Hiroaki, Iwata-shi, Shizuoka 438-8501 (JP)
(74) Representative: Grünecker, Kinkeldey, Stockmair & Schwanhäusser

(56) References cited:
- EP-A2- 0 422 515
- EP-A2- 1 277 635
- JP-A- 2001 260 848
- US-A- 5 344 220
- US-B1- 6 419 329

## Description

The present invention relates to a braking system for a motorcycle, and more particularly, to a braking system for a motorcycle having an ABS (Antilock Brake System) mechanism.

Conventionally, there is proposed a braking system for a motorcycle having an ABS mechanism in the Japanese Patent Application Laid-Open No. 2000-127930, for example. In the motorcycle to which a motorcycle braking system with the ABS mechanism is mounted, if a wheel is brought into a locked state, the ABS mechanism is activated. This enables reduction of hydraulic pressure supplied to the braking force generating mechanism which applies a braking force to the locked wheel. As a result, the braking force of the locked wheel is reduced and the locked state of the wheel is released. If the release of the locked state of the wheel is detected, hydraulic pressure supplied to the braking force generating mechanism is increased by the ABS mechanism. With this, the braking force of the wheel is again increased. According to the motorcycle braking system having the ABS mechanism, hydraulic pressure supplied to the braking force generating mechanism is repeatedly reduced and increased. This makes it possible to effectively reduce a time period during which the wheel is in the locked state, and also to generate a high braking force.

If hydraulic pressure of the braking force generating mechanism is abruptly increased after the locked state of the wheel is released, there is an adverse possibility that the wheel is brought into the locked state again. Therefore, hydraulic pressure of the braking force generating mechanism after the locked state of the wheel is released is in general increased gently.

When the vehicle runs on a bad road for example, a rotation speed of a wheel is largely varied. For this reason, the ABS mechanism is activated in some cases even if the rotation speed does not actually reach the road surface limit. In such a case, it is not preferable to activate the ABS mechanism. Therefore, the activation of the ABS mechanism in such a case is generally called unexpected activation.

In order to obtain a large braking force even when the ABS mechanism is unexpectedly activated, it is important to swiftly recover the braking force of the wheel which was reduced by the ABS mechanism. However, hydraulic pressure of the braking force generating mechanism after the locked state of the wheel is released is in general increased gently as described above. For this reason, when the ABS mechanism is unexpectedly activated, there is a problem that a sufficiently high braking force cannot easily be obtained.

On the other hand, assume a case where, in order to obtain a high braking force when the ABS mechanism is unexpectedly activated, hydraulic pressure of the braking force generating mechanism is swiftly increased after the locked state of the wheel is released. In such a case, there is an adverse possibility that the wheel is repeatedly brought into the locked state at the time of activation of the ABS mechanism which is not the unexpected activation. Therefore, it becomes difficult to obtain a sufficiently high braking force.

A braking system for a motorcycle with the features of the preamble of the independent claim is known from EP1277635 A2.

It is an object of the invention to provide a braking system for a motorcycle as indicated above capable of obtaining a high braking force irrespective of the condition of a road surface.

According to the present invention said object is solved by braking system for a motorcycle having the features of independent claim 1. Preferred embodiments and applications are laid down in the dependent claims.

Such braking system for a motorcycle relates to a braking system for a motorcycle having a plurality of wheels including a front wheel and a rear wheel. The braking system for a motorcycle includes a hydraulic pressure supply mechanism, a braking force generating mechanism, an operation member, an ABS mechanism, a locked state detection section, an operation amount detection section and a control unit. The hydraulic pressure supply mechanism supplies hydraulic pressure. The braking force generating mechanism is supplied with hydraulic pressure from the hydraulic pressure supply mechanism, thereby generating a braking force. The operation member is for operating the hydraulic pressure supply mechanism. The ABS mechanism reduces hydraulic pressure supplied to the braking force generating mechanism. The locked state detection section detects a locked state of the wheel. The operation amount detection section detects an operation amount of the operation member. The control unit causes the ABS mechanism to reduce hydraulic pressure supplied to the braking force generating mechanism when the locked state of the wheel is detected. The control unit causes the ABS mechanism to increase hydraulic pressure supplied to the braking force generating mechanism when the locked state of the wheel is released during driving of the ABS mechanism. If the operation amount of the operation member is equal to or less than the predetermined operation amount when the locked state of the wheel is released during driving of the ABS mechanism, the control unit increases hydraulic pressure supplied to the braking force generating mechanism at higher pressure-increase speed than that of a case in which the operation amount of the operation member is greater than a predetermined operation amount.

The locked state detection section may include a vehicle speed detection section which detects a vehicle speed of the motorcycle, and a wheel rotation speed detection section which detects a rotation speed of the wheel. The control unit may determine that the locked state of the wheel is released when a difference between the vehicle speed of the motorcycle and the rotation speed of the wheel becomes equal to or less than a predetermined speed difference during driving of the ABS mechanism.

Further, the control unit may determine that the locked state of the wheel is released when the difference between the vehicle speed of the motorcycle and the rotation speed of the wheel becomes equal to or less than the predetermined speed difference and when a wheel acceleration obtained by differentiating the rotation speed of the wheel with respect to time becomes equal to or higher than the predetermined acceleration during driving of the ABS mechanism.

It is preferable that, when the locked state of the wheel is released during driving of the ABS mechanism, the control unit increases hydraulic pressure supplied to the braking force generating mechanism at a first pressure-increase speed if the wheel acceleration obtained by differentiating the rotation speed of the wheel with respect to time is smaller than a predetermined acceleration; the control unit increases hydraulic pressure supplied to the braking force generating mechanism at a second pressure-increase speed which is higher than the first pressure-increase speed if the wheel acceleration is equal to or higher than a predetermined acceleration and the operation amount of the operation member is greater than the predetermined operation amount; and the control unit increases hydraulic pressure supplied to the braking force generating mechanism at a third pressure-increase speed which is higher than the second pressure-increase speed if the wheel acceleration is equal to or higher than the predetermined acceleration and the operation amount of the operation member is equal to or less than the predetermined operation amount.

The braking system for a motorcycle may further include a main brake fluid passage which connects the hydraulic pressure supply mechanism and the braking force generating mechanism with each other. In such a case, the operation amount detection section may be a hydraulic pressure detection section which detects hydraulic pressure in the main brake fluid passage. The control unit may determine that the operation amount of the operation member is equal to or less than the predetermined operation amount when hydraulic pressure detected by the hydraulic pressure detection section is equal to or less than predetermined hydraulic pressure, while the control unit may determine that the operation amount of the operation member is greater than the predetermined operation amount when hydraulic pressure detected by the hydraulic pressure detection section is greater than the predetermined hydraulic pressure.

The ABS mechanism may include a first ABS mechanism on-off valve which is disposed in the main brake fluid passage to open and close the main brake fluid passage, an ABS mechanism brake fluid passage which connects a portion of the main brake fluid passage closer to the hydraulic pressure supply mechanism and a portion of the main brake fluid passage closer to the braking force generating mechanism than a portion of the main brake fluid passage where the first ABS mechanism on-off valve is disposed with each other, a brake fluid pump which is disposed in the ABS mechanism brake fluid passage to send brake fluid on the side of the braking force generating mechanism toward the hydraulic pressure supply mechanism, and a second ABS mechanism on-off valve which is disposed in the ABS mechanism brake fluid passage to open and close the ABS mechanism brake fluid passage. In this case, the control unit may drive the brake fluid pump, close the first ABS mechanism on-off valve, and open the second ABS mechanism on-off valve, thereby reducing hydraulic pressure supplied to the braking force generating mechanism when the locked state of the wheel is detected, and may adjust openings of the first and the second ABS mechanism on-off valves, thereby increasing hydraulic pressure supplied to the braking force generating mechanism when the locked state of the wheel is released during driving of the ABS mechanism.

It is preferable that the control unit immediately opens the first ABS mechanism on-off valve and closes the second ABS mechanism on-off valve when the wheel acceleration is equal to or higher than a predetermined acceleration and the operation amount of the operation member is equal to or less than the predetermined operation amount. According to this structure, when the ABS mechanism is activated unexpectedly, it is possible to more swiftly increase hydraulic pressure supplied to the braking force generating mechanism and therefore, a greater braking force can be generated as a whole.

It is preferable that the braking force generating mechanism above is provided to the rear wheel as a driving wheel.

The vehicle speed detection section may include a front wheel rotation speed detection section which detects a rotation speed of the front wheel, and a rear wheel rotation speed detection section which detects a rotation speed of the rear wheel. In this case, the wheel rotation speed detection section is constituted by the front wheel rotation speed detection section or the rear wheel rotation speed detection section.

Accordingly, if the operation amount of the operation member is equal to or less than the predetermined operation amount when the locked state of the wheel is released during driving of the ABS mechanism, hydraulic pressure supplied to the braking force generating mechanism is increased at higher pressure-increase speed than that of a case in which the operation amount of the operation member is greater than a predetermined operation amount. Therefore, when the ABS mechanism is activated unexpectedly, hydraulic pressure supplied to the braking force generating mechanism is swiftly increased. Therefore, a high braking force can be obtained even if the ABS mechanism is activated unexpectedly. Accordingly, a high braking force can be obtained irrespective of the condition of a road surface.

### BRIEF DESCRIPTION OF THE DRAWINGS

Fig. 1 is a left side view of a motorcycle;
Fig. 2 is a schematic plan view of the motorcycle;
Fig. 3 is a schematic structure diagram showing a structure of a braking system;
Fig. 4 is a schematic structure diagram of the braking system when a brake lever is operated;
Fig. 5 is a schematic structure diagram of the braking system when a brake pedal is operated;
Fig. 6 is a schematic structure diagram of the braking system for explaining ABS action of a second braking force generating mechanism when the brake lever is being operated;
Fig. 7 is a schematic structure diagram of the braking system for explaining ABS action of a first and the second braking force generating mechanisms when the brake pedal is being operated;
Fig. 8 is a flowchart showing ABS control;
Fig. 9 is a graph exemplary showing a vehicle speed and a wheel rotation speed when µ of a road surface is small. A graph A shows the vehicle speed, and a graph B shows the wheel rotation speed; and
Fig. 10 is a graph exemplary showing the vehicle speed and the wheel rotation speed when µ of the road surface is large. A graph A shows the vehicle speed, and a graph B shows the wheel rotation speed.

### DESCRIPTION OF THE PREFERRED EMBODIMENT

One example of a preferred mode in which the present invention is implemented will be described. However, the invention is not limited to the embodiment below.

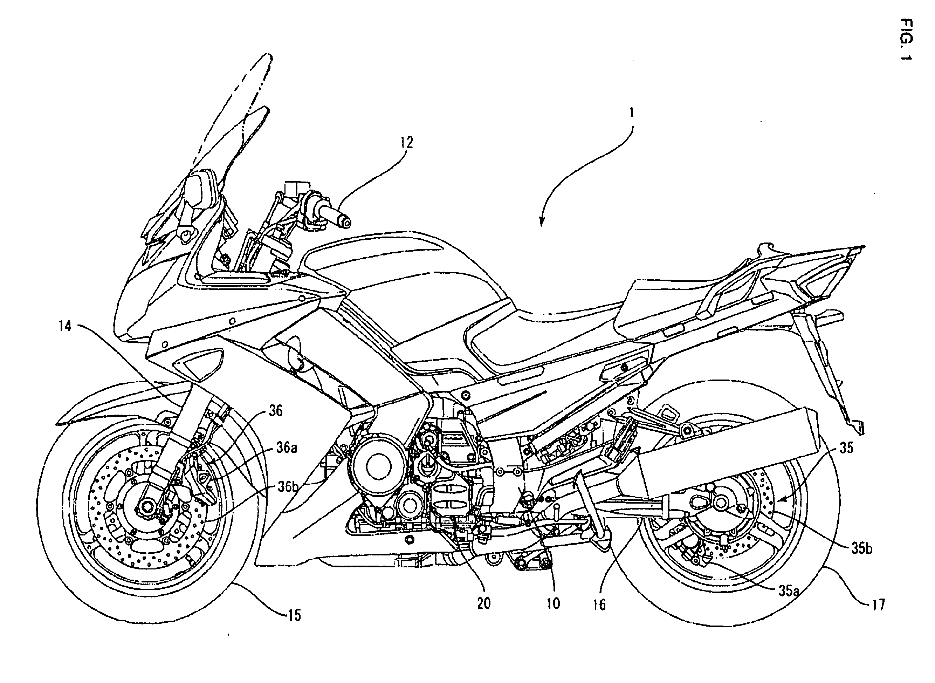

In this embodiment, one example of a preferred mode in which the present invention is implemented will be described based on a motorcycle 1 in a narrow sense shown in Fig. 1.

In the present invention, the motorcycle is not limited to the motorcycle in the narrow sense. The motorcycle refers to any vehicle on which a rider straddles. The motorcycle includes an ATV (All Terrain Vehicle), and a motorcycle in a broad sense. The motorcycle in the broad sense includes a moped, a motocrosser and a scooter in a narrow sense in addition to the motorcycle in the narrow sense. The motorcycle in the broad sense includes a vehicle having two or more front wheels and/or two or more rear wheels.

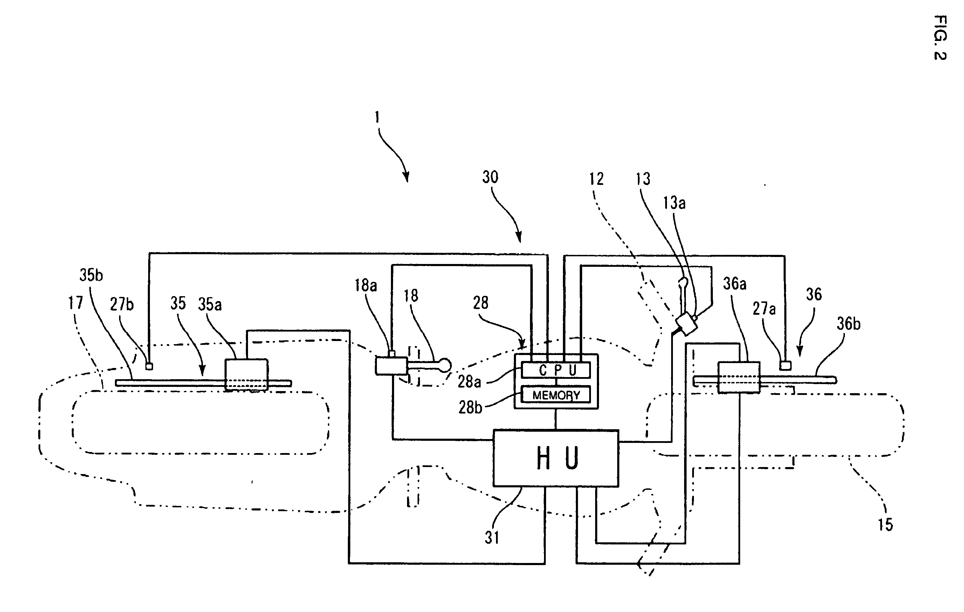

First, a schematic structure of the motorcycle 1 will be described with reference to Figs. 1 and 2. As shown in Fig. 1, the motorcycle 1 includes a body frame 10. A head pipe (not shown) is formed on a front end portion of the body frame 10. A steering shaft (not shown) is rotatably inserted into the head pipe. A pair of left and right front forks 14 are mounted on the steering shaft. A front wheel 15 is rotatably supported at lower end portions of the pair of left and right front forks 14. A steering handle bar 12 is mounted on the head pipe.

A pivot shaft (not shown) is mounted on a rear end portion of the body frame 10. A rear arm 16 is swingably mounted on the pivot shaft. A rear wheel 17 is rotatably supported by a rear end portion of the rear arm 16. The rear wheel 17 is driven by an engine 20 which is suspended by the body frame 10.

As shown in Fig. 2, the motorcycle 1 is provided with a braking system 30. The braking system 30 is for decelerating the motorcycle 1. The braking system 30 of the embodiment includes a front wheel-side braking mechanism which applies a brake to the front wheel 15, a rear wheel-side braking mechanism which applies a brake to the rear wheel 17, a front association mechanism, a rear association mechanism, and an ABS mechanism. The front association mechanism refers to a mechanism which drives the rear wheel-side braking mechanism when the front wheel-side braking mechanism is operated. The rear association mechanism refers to a mechanism which drives the front wheel-side braking mechanism when the rear wheel-side braking mechanism is operated. Most mechanisms of the braking system 30 are accommodated in an HU (Hydraulic Unit) 31.

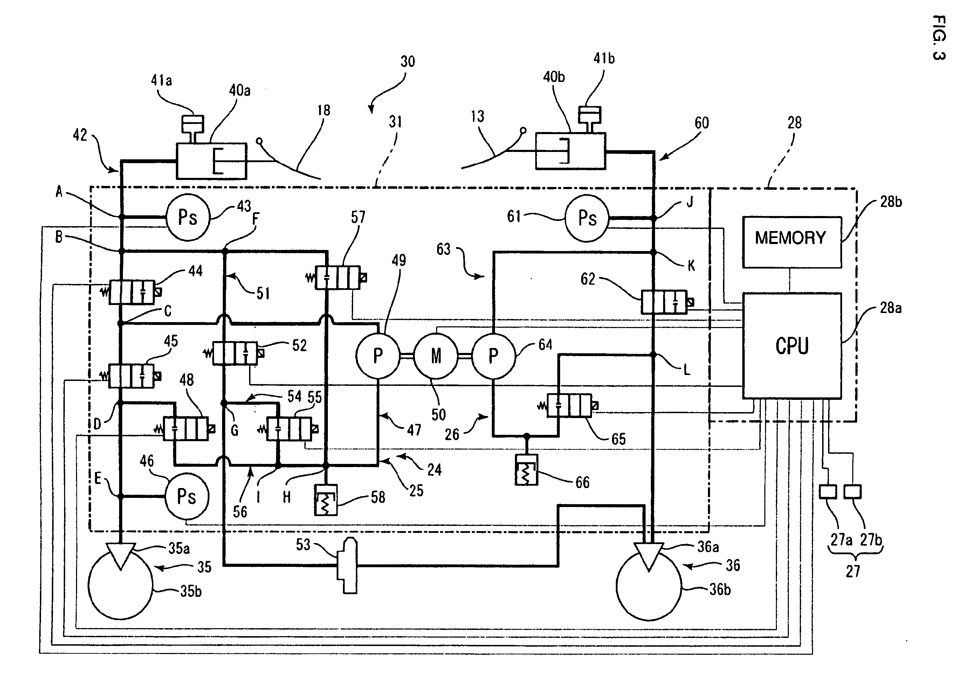

The structure of the braking system 30 will be described in detail with reference to Figs. 2 and 3. As shown in Fig. 3, the braking system 30 includes a first braking force generating mechanism 35 and a second braking force generating mechanism 36.

As shown in Fig. 2, the first braking force generating mechanism 35 is provided to the rear wheel 17. The first braking force generating mechanism 35 is supplied with hydraulic pressure, thereby generating a braking force for the rear wheel 17. More specifically, the first braking force generating mechanism 35 includes a first caliper 35a and a first brake disk 35b. The first brake disk 35b rotates together with the rear wheel 17.

The second braking force generating mechanism 36 is provided to the front wheel 15. More specifically, the second braking force generating mechanism 36 is supplied with hydraulic pressure, thereby generating a braking force for the front wheel 15. The second braking force generating mechanism 36 includes a second caliper 36a and a second brake disk 36b. The second brake disk 36b rotates together with the front wheel 15.

As shown in Fig. 3, the first braking force generating mechanism 35 is connected to a first master cylinder 40a through a first brake fluid passage 42 as the main brake fluid passage. A reservoir tank 41a and a brake pedal 18 as a first operation member are connected to the first master cylinder 40a. If a rider operates the brake pedal 18, hydraulic pressure is supplied from the first master cylinder 40a to the first braking force generating mechanism 35. As shown in Fig. 2, the brake pedal 18 is provided with a stroke sensor 18a. An operation amount of the brake pedal 18 is detected also by the stroke sensor 18a. The detected operation amount of the brake pedal 18 is output to a CPU 28a.

A second hydraulic pressure sensor 43 is connected to a point A of the first brake fluid passage 42. The second hydraulic pressure sensor 43 detects hydraulic pressure at the point A of the first brake fluid passage 42.

A first on-off valve 44 and a third on-off valve 45 as a first ABS mechanism on-off valve are disposed in the first brake fluid passage 42. The first on-off valve 44 is disposed between a point B and a point C of the first brake fluid passage 42. The first on-off valve 44 is an open-when-nonenergized type on-off valve which opens when electric power is not supplied thereto, and which closes when electric power is supplied thereto. The third on-off valve 45 is disposed between the point C and a point D of the first brake fluid passage 42..The third on-off valve 45 is also an open-when-nonenergized type on-off valve like the first on-off valve 44.

A third hydraulic pressure sensor 46 is connected to a point E of the first brake fluid passage 42. The third hydraulic pressure sensor 46 can measure hydraulic pressure more precisely than the second hydraulic pressure sensor 43. However, the second hydraulic pressure sensor 43 is more excellent in terms of the resistance to pressure than the third hydraulic pressure sensor 46.

Here, the point B of the first brake fluid passage 42 closer to the first master cylinder 40a than a portion of the first brake fluid passage 42 where the first on-off valve 44 is disposed and the point C closer to the first braking force generating mechanism 35 are connected to each other through a third brake fluid passage 47. The third brake fluid passage 47 extends from the point B to the point C through a point F and a point H.

A (**first**) brake fluid pump 49 is disposed in the third brake fluid passage 47. The brake fluid pump 49 is connected to a motor 50. The brake fluid pump 49 is activated when the motor 50 is driven by a later-described ECU 28. If the brake fluid pump 49 is activated, pressure on the side of the point B becomes low pressure and the pressure on the side of the point C becomes high pressure.

A second on-off valve 57 is disposed in the third brake fluid passage 47. More specifically, the second on-off valve 57 is disposed closer to the point B than the brake fluid pump 49 of the third brake fluid passage 47. The second on-off valve 57 is a closed-when-nonenergized type on-off valve which closes when electric power is not supplied thereto and which opens when electric power is supplied thereto.

Further, a buffer chamber 58 is connected to the point H of the third brake fluid passage 47.

The point F, which is located closer to the point B than the second on-off valve 57, is connected to the second caliper 36a through a fourth brake fluid passage 51. A fifth on-off valve 52 is disposed between the point F and a point G of the fourth brake fluid passage 51. The fifth on-off valve 52 is an open-when-nonenergized type on-off valve. A metering valve 53 is disposed between the point G of the fourth brake fluid passage 51 and the second caliper 36a.

The point D of the first brake fluid passage 42 and the point H of the third brake fluid passage 47 are connected to each other through a fifth brake fluid passage 56. The fifth brake fluid passage 56 and a portion of the third brake fluid passage 47 between a point H and the point C constitute an ABS mechanism brake fluid passage 25. The ABS mechanism brake fluid passage 25 connects a portion of the first brake fluid passage 42 closer to the first master cylinder 40a and a portion of the first brake fluid passage 42 closer to the first braking force generating mechanism 35 than a portion of the first brake fluid passage 42 where the third on-off valve 45 as the first ABS mechanism on-off valve is disposed.

A fourth on-off valve 48 as a second ABS mechanism on-off valve is disposed in the fifth brake fluid passage 56. The fourth on-off valve 48 is a closed-when-nonenergized type on-off valve. In this embodiment, the fourth on-off valve 48 as the second ABS mechanism on-off valve, the third on-off valve 45 as the first ABS mechanism on-off valve, the ABS mechanism brake fluid passage 25 and the first brake fluid pump 49 constitute a rear wheel side ABS mechanism 24.

The point G of the fourth brake fluid passage 51 and a point I of the fifth brake fluid passage 56 are connected to each other through a sixth brake fluid passage 54. A sixth on-off valve 55 is disposed in the sixth brake fluid passage 54. The sixth on-off valve 55 is a closed-when-nonenergized type on-off valve.

The second braking force generating mechanism 36 is connected to a second master cylinder 40b through a second brake fluid passage 60 as the main brake fluid passage. A reservoir tank 41b and a brake lever 13 as a second operation member are connected to the second master cylinder 40b. If a rider operates the brake lever 13, hydraulic pressure is supplied from the second master cylinder 40b to the second braking force generating mechanism 36. As shown in Fig. 2, a stroke sensor 13a is provided to the brake lever 13. the operation amount of the brake lever 13 is detected also by the stroke sensor 13a. The detected operation amount of the brake lever 13 is output to the CPU 28a.

A first hydraulic pressure sensor 61 as an operation amount detection section and a hydraulic pressure detection section is connected to a point J of the second brake fluid passage 60. The first hydraulic pressure sensor 61 detects hydraulic pressure at the point J of the second brake fluid passage 60. With this, the operation amount of the brake lever 13 as the second operation member is indirectly detected.

As described above, in this embodiment, the first hydraulic pressure sensor 61 detects both the hydraulic pressure in the second brake fluid passage 60 and the operation of the brake lever 13. Therefore, as compared with a case where a special-purpose sensor for detecting the operation of the brake lever 13 is provided, the number of parts can be reduced and the structure can be simplified.

A sensor which directly detects the operation amount of the brake lever 13 may be disposed instead of the first hydraulic pressure sensor 61, or together with the first hydraulic pressure sensor 61. An example of the sensor which directly detects the operation amount of the brake lever 13 includes a position sensor which detects a position of the brake lever 13.

A seventh on-off valve 62 as the first ABS mechanism on-off valve is disposed in a portion closer to the second braking force generating mechanism 36 than the point J of the second brake fluid passage 60. The seventh on-off valve 62 is an open-when-nonenergized type on-off valve.

A point K of the second brake fluid passage 60 closer to the second master cylinder 40b than the seventh on-off valve 62 and a point L of the second brake fluid passage 60 on the side of the second braking force generating mechanism 36 are connected to each other through a seventh brake fluid passage 63 as the ABS mechanism brake fluid passage.

A second brake fluid pump 64 is disposed in the seventh brake fluid passage 63. The second brake fluid pump 64 is driven by the motor 50 mentioned above. If the second brake fluid pump 64 is driven, the pressure on the side of the point L becomes low pressure and the pressure on the side of the point K becomes high pressure.

In this embodiment, in a state where a power source of the motorcycle 1 is ON, the motor 50 is always driven, and the first and the second brake fluid pumps 49 and 64 are always activated.

An eighth on-off valve 65 as a second ABS mechanism on-off valve is disposed between the second brake fluid pump 64 and the point L. The eighth on-off valve 65 is a closed-when-nonenergized type on-off valve. In this embodiment, the eighth on-off valve 65 as the second ABS mechanism on-off valve, the seventh on-off valve 62 as the first ABS mechanism on-off valve, the seventh brake fluid passage 63 as the ABS mechanism brake fluid passage and the second brake fluid pump 64 constitute the front wheel side ABS mechanism 26.

A buffer chamber 66 is connected to a connection point between the eighth on-off valve 65 and the second brake fluid pump 64.

As shown in Fig. 3, the ECU (Electronic Control Unit) 28 as a control unit is disposed adjacent to the HU 31. In this embodiment, the ECU 28 is used only for controlling the HU 31. An ECU (not shown) used for controlling the engine 20 shown in Fig. 1 is provided independently from the ECU 28. However, the present invention is not limited to this configuration. For example, one ECU 28 may control both the engine 20 and the HU 31.

The ECU 28 includes the CPU 28a as a calculating section and a memory 28b as a storing section connected to the CPU 28a. Various settings are stored in the memory 28b as will be described in detail later. Various detection values are also stored in the memory 28b.

The CPU 28a is connected to the on-off valves, the hydraulic pressure sensors and the motor 50 which are included in the HU 31. The on-off valves and the motor 50 included in the HU 31 are controlled by the CPU 28a. Hydraulic pressures detected by the hydraulic pressure sensors 43, 46 and 61 are sent to the CPU 28a.

A front wheel rotation speed sensor 27a and a rear wheel rotation speed sensor 27b as wheel rotation speed detection sections are connected to the CPU 28a. A rotation speed of the front wheel 15 is detected by the front wheel rotation speed sensor 27a and is output to the CPU 28a. A rotation speed of the rear wheel 17 is detected by the rear wheel rotation speed sensor 27b and is output to the CPU 28a.

In this embodiment, the CPU 28a calculates a vehicle speed which is a speed of the motorcycle 1 based on output from the front wheel rotation speed sensor 27a and the rear wheel rotation speed sensor 27b. That is, in this embodiment, the front wheel rotation speed sensor 27a and the rear wheel rotation speed sensor 27b constitute a vehicle speed sensor 27 as the vehicle speed detection section. The vehicle speed sensor 27 as the vehicle speed detection section constitutes the locked state detection section.

A method for calculating a vehicle speed from the front wheel rotation speed and the rear wheel rotation speed is not especially limited. For example, an average value of the front wheel rotation speed and the rear wheel rotation speed may be defined as the vehicle speed.

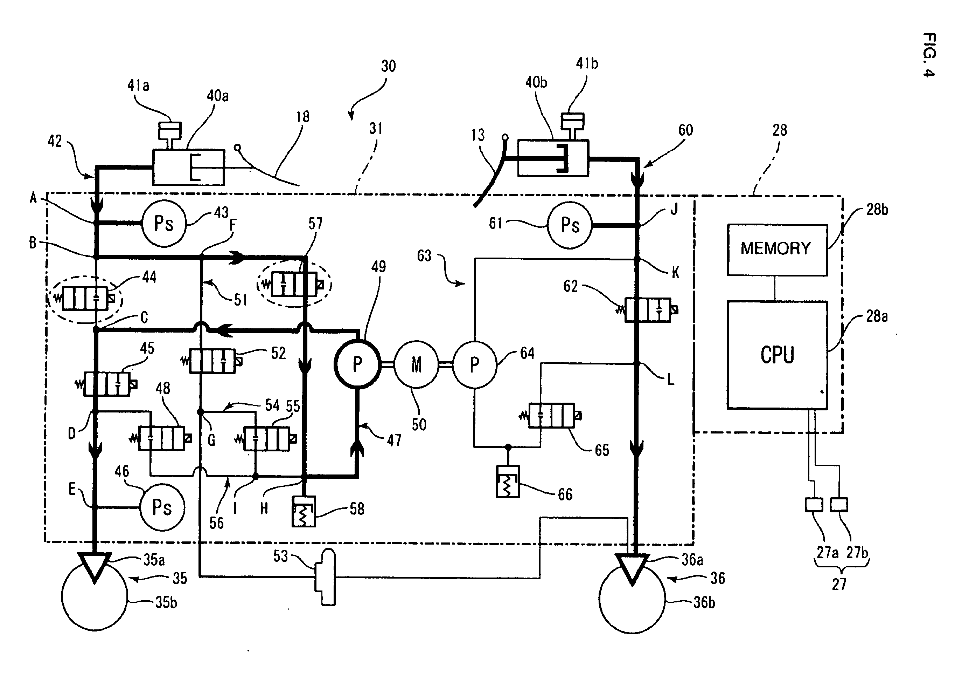

Next, basic control action of the braking system 30 will be described with reference to Figs. 4 to 7. In Figs. 4 to 7, on-off valves which are surrounded by phantom lines are energized on-off valves. On the other hand, on-off valves which are not surrounded by the phantom lines are nonenergized on-off valves.

Fig. 4 is a schematic structure diagram of the braking system when the brake lever 13 is operated. As shown in Fig. 4, if a rider operates the brake lever 13, hydraulic pressure is supplied from the second master cylinder 40b. Here, the seventh on-off valve 62 is the open-when-nonenergized type on-off valve. Therefore, hydraulic pressure from the second master cylinder 40b is supplied to the second caliper 36a through the second brake fluid passage 60. With this, a braking force is generated in the second braking force generating mechanism 36 which is provided to the front wheel 15.

If the brake lever 13 is operated, the increase of hydraulic pressure in the second brake fluid passage 60 is detected by the first hydraulic pressure sensor 61, and this fact is output to the ECU 28. The ECU 28 determines whether or not the brake lever 13 is operated based on hydraulic pressure in the second brake fluid passage 60.

If the ECU 28 determines that the brake lever 13 is operated, the ECU 28 closes the first on-off valve 44 and opens the second on-off valve 57. As a result, brake fluid in the first master cylinder 40a is sucked by the first brake fluid pump 49, and the brake fluid is supplied to the first caliper 35a through the third brake fluid passage 47 and the first brake fluid passage 42. With this, a braking force is generated in the first braking force generating mechanism 35 which is provided to the rear wheel 17.

In the braking system 30, if the brake lever 13 is operated, a braking force is generated in the second braking force generating mechanism 36 and a braking force is generated also in the first braking force generating mechanism 35.

This associationed operation is realized through the ECU 28. For this reason, this front associationed operation is called an electrically associationed operation.

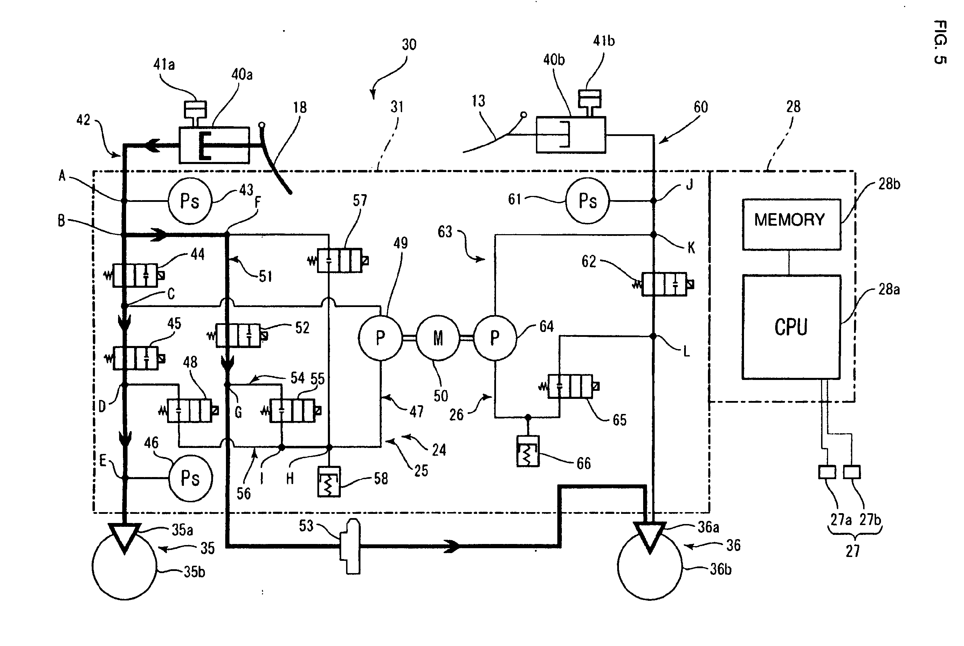

Fig. 5 is a schematic structure diagram of the braking system when the brake pedal 18 is operated. As shown in Fig. 5, if the brake pedal 18 is operated, brake fluid is discharged from the first master cylinder 40a. Here, the first on-off valve 44 and the third on-off valve 45 are open-when-nonenergized type on-off valves.
Therefore, the brake fluid discharged from the first master cylinder 40a is supplied to the first caliper 35a through the first brake fluid passage 42. With this, a braking force is generated in the first braking force generating mechanism 35 which is provided to the rear wheel 17.

The fifth on-off valve 52 is also the open-when-nonenergized type on-off valve. Therefore, brake fluid discharged from the first master cylinder 40a is supplied also to the second caliper 36a through the fourth brake fluid passage 51. With this, a braking force is generated in the second braking force generating mechanism 36 which is provided to the front wheel 15.

Thus in the braking system 30, if the brake pedal 18 is operated, a braking force is generated not only in the first braking force generating mechanism 35 but also in the second braking force generating mechanism 36.

This associationed operation is different from the associationed operation caused when the brake lever 13 is operated and is mechanically performed without using the ECU 28. Thus, this rear associationed operation is called a mechanically associationed operation.

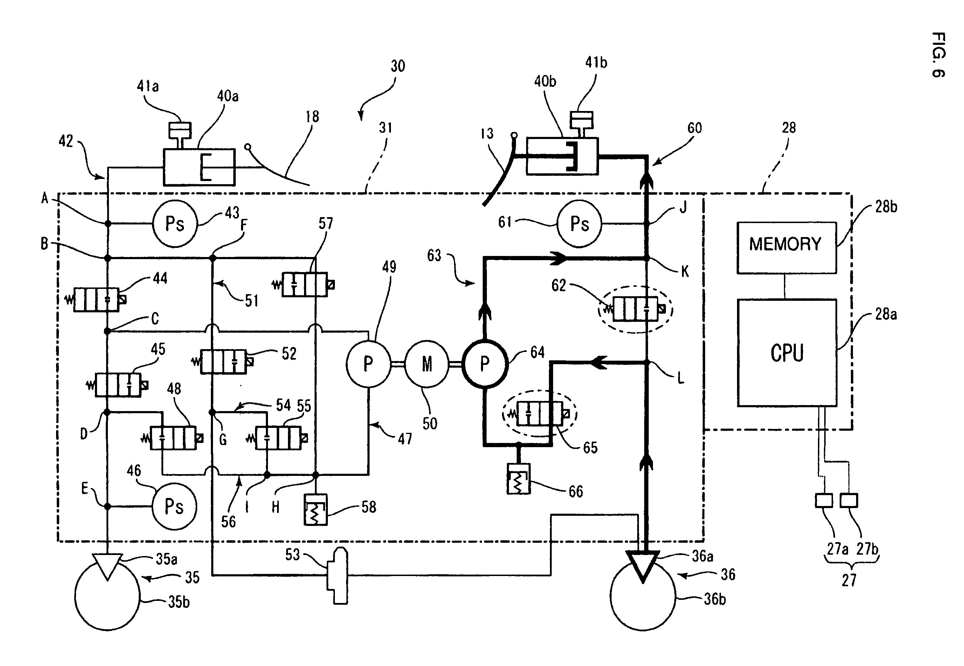

Fig. 6 is a schematic structure diagram of the braking system for describing the ABS action of the second braking force generating mechanism 36 when the brake lever 13 is operated.

The ECU 28 detects a locked state of the front wheel 15 based on output from the front wheel rotation speed sensor 27a and output from the rear wheel rotation speed sensor 27b. More specifically, the ECU 28 detects the locked state of the front wheel 15 when the magnitude of the front wheel rotation speed is largely reduced with respect to the vehicle speed.

If the ECU 28 detects the locked state of the front wheel 15, the ECU 28 causes the front wheel side ABS mechanism 26 to reduce hydraulic pressure supplied to the second braking force generating mechanism 36. More specifically, if the ECU 28 detects the locked state of the front wheel 15, the ECU 28 supplies current to the seventh and the eighth on-off valves 62 and 65. With this, the seventh on-off valve 62 is closed and the eighth on-off valve 65 is opened. Therefore, brake fluid is sent from the second caliper 36a to the second master cylinder 40b through the seventh brake fluid passage 63. As a result, a braking force generated in the second braking force generating mechanism 36 is reduced.

If the ECU 28 detects that the locked state of the front wheel 15 is released, the ECU 28 causes the front wheel side ABS mechanism 26 to increase hydraulic pressure supplied to the second braking force generating mechanism 36. More specifically, if the ECU 28 detects that the locked state of the front wheel 15 is released, the ECU 28 adjusts the openings of the seventh and the eighth on-off valves 62 and 65. In more detail, the ECU 28 increases the opening of the seventh on-off valve 62 and reduces the opening of the eighth on-off valve 65. Preferably, the opening of the seventh on-off valve 62 is increased in a state where the eighth on-off valve 65 is fully closed. With this, the braking force generated in the second braking force generating mechanism 36 is again increased.

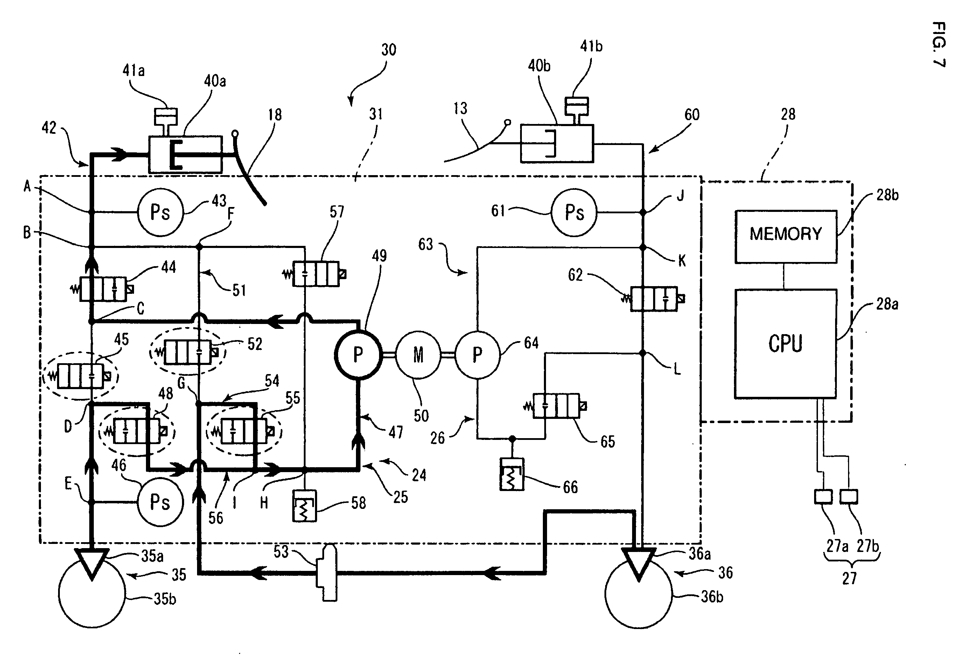

Fig. 7 is a schematic structure diagram for explaining the ABS action of the first and the second braking force generating mechanisms 35 and 36 when the brake pedal 18 is operated.

The ECU 28 detects the locked state of the rear wheel 17 based on output from the front wheel rotation speed sensor 27a and output from the rear wheel rotation speed sensor 27b. More specifically, the ECU 28 detects the locked state of the rear wheel 17 when the rear wheel rotation speed becomes substantially smaller with respect to the vehicle speed.

If the ECU 28 detects the locked state of the rear wheel 17, the ECU 28 causes the rear wheel side ABS mechanism 24 to reduce hydraulic pressure supplied to the first braking force generating mechanism 35. More specifically, if the ECU 28 detects the locked state of the rear wheel 17, the ECU 28 supplies current to the third on-off valve 45 and the fourth on-off valve 48. With this, the third on-off valve 45 is closed. The fourth on-off valve 48 is opened. Thus, brake fluid of the first caliper 35a is sent to the first master cylinder 40a through the third brake fluid passage 47. As a result, a braking force generated in the first braking force generating mechanism 35 is reduced.

If the ECU 28 detects that the locked state of the rear wheel 17 is released, the ECU 28 causes the rear wheel side ABS mechanism 24 to increase hydraulic pressure supplied to the first braking force generating mechanism 35. More specifically, if the ECU 28 detects that the locked state of the rear wheel 17 is released, the ECU 28 adjusts the openings of the third and the fourth on-off valves 45 and 48. In more detail, the opening of the third on-off valve 45 is increased and the opening of the fourth on-off valve 48 is reduced. Preferably, the opening of the third on-off valve 45 is increased in a state where the fourth on-off valve 48 is fully closed. With this, the braking force generated in the first braking force generating mechanism 35 is again increased.

These ABS actions are the same even during the front associationed operation in which the brake lever 13 is operated.

If the ECU 28 detects the locked state of the front wheel 15, the ECU 28 supplies current to the fifth on-off valve 52 and the sixth on-off valve 55. With this, the fifth on-off valve 52 is closed and the sixth on-off valve 55 is opened. For this reason, brake fluid of the second caliper 36a is sent to the second master cylinder 40b through the sixth brake fluid passage 54. As a result, a braking force generated in the second braking force generating mechanism 36 is reduced.

If the ECU 28 detects that the locked state of the front wheel 15 is released, the ECU 28 stops the current supply to the fifth and the sixth on-off valves 52 and 55. With this, the fifth on-off valve 52 is opened and the sixth on-off valve 55 is closed. As a result, the braking force generated in the second braking force generating mechanism 36 is again increased.

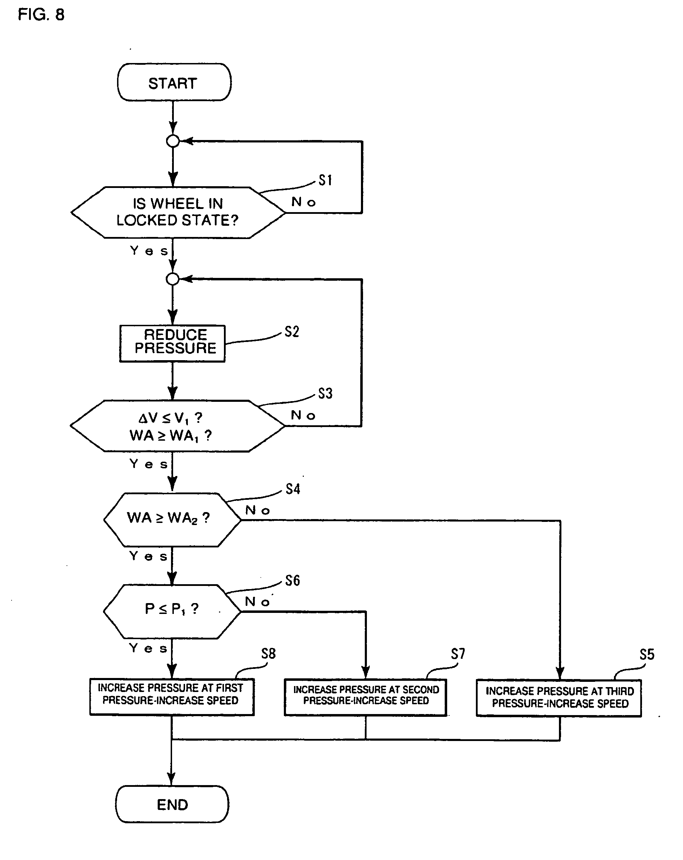

Next, detailed control concerning the ABS mechanism in the braking system 30 will be described mainly with reference to Fig. 8. As shown in Fig. 8, in step S1, the ECU 28 detects the locked state of the rear wheel 17 based on a detection value of the vehicle speed sensor 27 as the locked state detection section. More specifically, the ECU 28 detects the locked state of the rear wheel 17 based on a difference between the rear wheel rotation speed and the vehicle speed which is calculated from the front wheel rotation speed and the rear wheel rotation speed detected by the front wheel and the rear wheel rotation speed sensors 27a and 27b. If the difference between the vehicle speed and the rear wheel rotation speed is smaller than a predetermined difference, it is determined that the rear wheel 17 is not in the locked state. If the difference between the vehicle speed and the rear wheel rotation speed is equal to or higher than the predetermined difference, it is determined that the rear wheel 17 is in the locked state.

If it is determined that the rear wheel 17 is not in the locked state, step S1 is again executed. If, on the other hand, it is determined that the rear wheel 17 is in the locked state, the procedure is advanced to step S2.

In step S2, the ECU 28 causes the rear wheel side ABS mechanism 24 to reduce hydraulic pressure supplied to the first braking force generating mechanism 35. More specifically, as shown in Fig. 7, the ECU 28 drives the first brake fluid pump 49, closes the third on-off valve 45 and opens the fourth on-off valve 48. With this, hydraulic pressure which was supplied to the first caliper 35a is sent toward the first master cylinder 40a by the first brake fluid pump 49. As a result, hydraulic pressure supplied to the first caliper 35a is reduced and the braking force generated in the first braking force generating mechanism 35 is reduced.

After step S2, step S3 is executed. In step S3, the ECU 28 makes a pressure-increase shifting determination, i.e., determines whether or not hydraulic pressure supplied to the first braking force generating mechanism 35 should be increased. That is, the ECU 28 determines whether or not the locked state of the rear wheel 17 was released. Here, the "locked state of the rear wheel 17 was released" means that a slip degree of the rear wheel 17 is reduced. "Locked state of the rear wheel 17 was released" does not mean that the slip of the rear wheel 17 is completely eliminated.

More specifically, the ECU 28 makes the pressure-increase shifting determination based on a difference (ΔV) between the vehicle speed and the rear wheel rotation speed, and based on a rear wheel acceleration (WΔ) obtained by differentiating the rear wheel rotation speed with respect to time. The ECU 28 determines that the locked state of the rear wheel 17 is released when the difference (ΔV) between the vehicle speed and the rear wheel rotation speed is equal to or less than a predetermined speed difference (V₁) and the rear wheel acceleration (WA) is equal to or higher than a predetermined acceleration (WA₁). In such a case, the procedure is advanced from step S3 to step S4. On the other hand, when the difference (ΔV) between the vehicle speed and the rear wheel rotation speed is greater than the predetermined speed difference (V₁) and the rear wheel acceleration (WA) is smaller than the predetermined acceleration (WA₁), the ECU 28 determines that the locked state of the rear wheel 17 is not released. In such a case, step S3 is again executed.

In the present invention, the determination method for the release of the locked state of the wheel is not especially limited. For example, determination may be made as to release of the locked state of the wheel based on a parameter other than the difference (ΔV) between the vehicle speed and the rear wheel rotation speed and the wheel acceleration (WA).

In step S4, the ECU 28 determines whether or not the rear wheel acceleration (WA) is equal to or higher than a predetermined acceleration (WA₂). When it is determined in step S4 that the rear wheel acceleration (WA) is equal to or higher than the predetermined acceleration (WA₂), the procedure is advanced to step S6. If it is determined in step S4 that the rear wheel acceleration (WA) is smaller than the predetermined acceleration (WA₂), the procedure is advanced to step S5. The predetermined acceleration (WA₂) in step S4 is a value greater than the predetermined acceleration (WA₁) in step S3.

In step S5, the ECU 28 increases the opening of the third on-off valve 45 and reduces the opening of the fourth on-off valve 48. Preferably, the fourth on-off valve 48 is fully closed and the opening of the third on-off valve 45 is increased. With this, hydraulic pressure supplied to the first braking force generating mechanism 35 is increased at the first pressure-increase speed.

In step S6, the ECU 28 determines whether or not the operation amount of the brake pedal 18 is equal to or greater than a predetermined operation amount. More specifically, the ECU 28 determines whether or not the hydraulic pressure (P) detected by a second hydraulic pressure sensor 43 as the operation amount detection section is equal to or less than a predetermined hydraulic pressure (P₁). When the hydraulic pressure (P) is equal to or less than the predetermined hydraulic pressure (P₁), it is determined that the operation amount of the brake pedal 18 is equal to or less than the predetermined operation amount and the procedure is advanced to step S8. If the hydraulic pressure (P) is greater than the predetermined hydraulic pressure (P₁), it is determined that the operation amount of the brake pedal 18 is greater than the predetermined operation amount and the procedure is advanced to step S7.

In step S7, the ECU 28 increases the opening of the third on-off valve 45 and reduces the opening of the fourth on-off valve 48. Preferably, the fourth on-off valve 48 is fully closed and the opening of the third on-off valve 45 is increased. With this, hydraulic pressure supplied to the first braking force generating mechanism 35 is increased at the second pressure-increase speed. In step S8, the ECU 28 increases the opening of the third on-off valve 45 and reduces the opening of the fourth on-off valve 48. Preferably, the fourth on-off valve 48 is fully closed and the opening of the third on-off valve 45 is increased. With this, hydraulic pressure supplied to the first braking force generating mechanism 35 is increased at the third pressure-increase speed. Here, the first to third pressure-increase speeds have a relation of the first pressure-increase speed < the second pressure-increase speed < the third pressure-increase speed. More specifically, the third pressure-increase speed is set to a significantly large value in this embodiment. Thus, in step S8, hydraulic pressure supplied to the first braking force generating mechanism 35 is immediately increased to hydraulic pressure corresponding to the operation amount of the brake pedal 18.

In this embodiment, steps S1 to S8 are repeated during running of the motorcycle 1.

In the embodiment, the same control as that of the steps S1 to S8 is executed also on for the front wheel side.

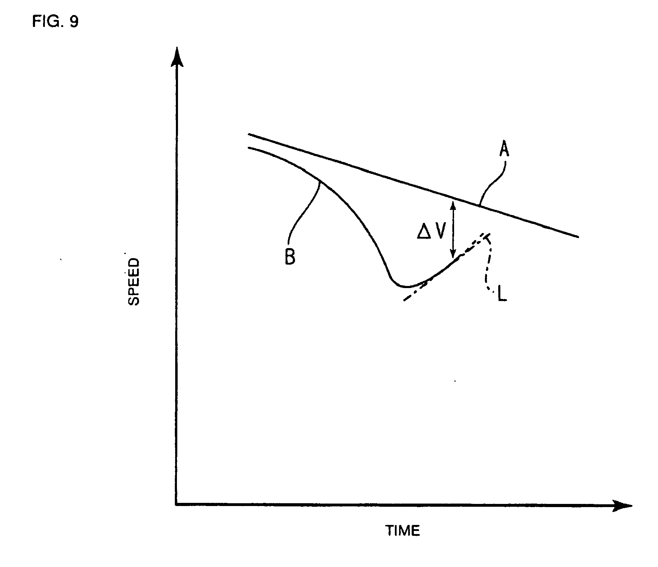

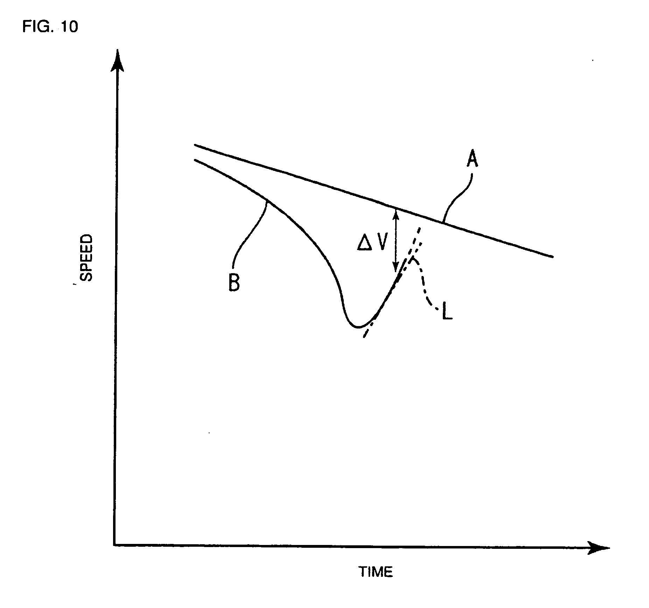

As described above, in this embodiment, it is determined in step S4 whether or not the wheel acceleration (WA) is equal to or higher than the predetermined acceleration (WA₁). Here, the wheel acceleration (WA) is correlated with µ of the road surface. More specifically, as shown in Figs. 9 and 10, the greater µ of the road surface is, the greater the wheel acceleration (WA) becomes. That is, the greater µ of the road surface is, the greater the inclination of a tangent L shown in Figs. 9 and 10 becomes. Thus, when it is determined that µ of the road surface is small and the activation of the ABS mechanism is not the unexpected activation, it is determined in step S4 that the wheel acceleration (WA) is less than the predetermined acceleration (WA₁), and the procedure is advanced to step S5. In step S5, hydraulic pressure supplied to the braking force generating mechanism is increased at the slow first pressure-increase speed. Therefore, when µ of the road surface is small and the activation of the ABS mechanism is not the unexpected activation, the braking force is restored gently. Thus, the locked state of the wheel is effectively prevented from being repeated. As a result, a large braking force can be generated as a whole.

On the other hand, when µ of the road surface is great, hydraulic pressure supplied to the braking force generating mechanism is increased at relatively high pressure-increase speed in step S7 or S8. Especially in step S6, when it is determined that the operation amount of a brake operation member is small and the ABS mechanism is activated unexpectedly, hydraulic pressure supplied to the braking force generating mechanism is increased at the extremely high third pressure-increase speed. Therefore, when the ABS mechanism is operated unexpectedly, the braking force generated in the braking force generating mechanism is swiftly restored. Thus, a large braking force can be generated as a whole even when the ABS mechanism is unexpectedly operated. As a result, a large braking force can be generated as a whole irrespective of the condition of a road surface.

Especially in this embodiment, hydraulic pressure supplied to the first braking force generating mechanism 35 is immediately increased to hydraulic pressure corresponding to the operation amount of the brake pedal 18. Accordingly, a large braking force can be generated as a whole even when the ABS mechanism is unexpectedly activated.

In this embodiment, the ABS mechanisms are provided to both the front wheel side and the rear wheel side, and the control shown in steps S1 to S8 is executed. However, the ABS mechanism may be provided to only one of the front wheel side and the rear wheel side. When the ABS mechanism is provided to only one of the wheels, it is preferable that the rear wheel 17 which is the driving wheel is provided with the ABS mechanism.

## Claims

1. A braking system (30) for a motorcycle or any other type of straddle-type vehicle, the braking system (30) including:
a hydraulic pressure supply mechanism (40a) which supplies hydraulic pressure;
a braking force generating mechanism (35) which generates a braking force when hydraulic pressure is supplied from the hydraulic pressure supply mechanism (40a);
an operation member (18) for operating the hydraulic pressure supply mechanism (40a);
an ABS mechanism (24) which reduces hydraulic pressure supplied to the braking force generating mechanism (35);
a locked state detection section which detects a locked state of a wheel (17) of the motorcycle;
an operation amount detection section (43) which detects an operation amount of the operation member (18); and
a control unit (28) which causes the ABS mechanism (24) to reduce hydraulic pressure supplied to the braking force generating mechanism (35) when the locked state of the wheel (17) is detected, and which causes the ABS mechanism (24) to increase hydraulic pressure supplied to the braking force generating mechanism (35) when the locked state of the wheel (17) is released during driving of the ABS mechanism (24),
the braking system being **characterized in that**
if the operation amount of the operation member (18) is equal to or less than a predetermined operation amount when the locked state of the wheel (17) is released during driving of the ABS mechanism (24), the control unit (28) increases hydraulic pressure supplied to the braking force generating mechanism (35) at higher pressure-increase speed than that when the operation amount of the operation member (18) is greater than the predetermined operation amount.

2. A braking system (30) for a motorcycle according to claim 1, **characterized in that** the locked state detection section includes:
a vehicle speed detection section (27) which detects a vehicle speed of the motorcycle; and
a wheel rotation speed detection section (27b) which detects a rotation speed of the wheel (17), and
the control unit (28) determines that the locked state of the wheel (17) is released when a difference between the vehicle speed of the motorcycle and the rotation speed of the wheel (17) becomes equal to or less than a predetermined speed difference during driving of the ABS mechanism (24).

3. A braking system (30) for a motorcycle according to claim 2, **characterized in that** the control unit (28) determines that the locked state of the wheel (17) is released when the difference between the vehicle speed of the motorcycle and the rotation speed of the wheel (17) becomes equal to or less than the predetermined speed difference and when a wheel acceleration obtained by differentiating the rotation speed of the wheel (17) with respect to time becomes equal to or higher than the predetermined acceleration during driving of the ABS mechanism (24).

4. A braking system (30) for a motorcycle according to claim 3, **characterized in that**, when the locked state of the wheel (17) is released during driving of the ABS mechanism (24),
the control unit (28) increases hydraulic pressure supplied to the braking force generating mechanism (35) at a first pressure-increase speed if the wheel acceleration obtained by differentiating the rotation speed of the wheel (17) with respect to time is smaller than a predetermined acceleration,
increases hydraulic pressure supplied to the braking force generating mechanism (35) at a second pressure-increase speed which is higher than the first pressure-increase speed if the wheel acceleration is equal to or higher than the predetermined acceleration and the operation amount of the operation member (18) is greater than the predetermined operation amount, and
increases hydraulic pressure supplied to the braking force generating mechanism (35) at a third pressure-increase speed which is higher than the second pressure-increase speed if the wheel acceleration is equal to or higher than the predetermined acceleration and the operation amount of the operation member (18) is equal to or less than the predetermined operation amount.

5. A braking system (30) for a motorcycle according to any one of claims 1 to 3, **characterized by** a main brake fluid passage (42) which connects the hydraulic pressure supply mechanism (40a) and the braking force generating mechanism (35) with each other.

6. A braking system (30) for a motorcycle according to claim 5, **characterized in that** the operation amount detection section is a hydraulic pressure detection section (43) which detects hydraulic pressure in the main brake fluid passage (42), and
the control unit (28) determines that the operation amount of the operation member (18) is equal to or less than the predetermined operation amount when hydraulic pressure detected by the hydraulic pressure detection section (43) is equal to or less than a predetermined hydraulic pressure, and
determines that the operation amount of the operation member (18) is greater than the predetermined operation amount when hydraulic pressure detected by the hydraulic pressure detection section (43) is greater than the predetermined hydraulic pressure.

7. A braking system (30) for a motorcycle according to claim 5 or 6, **characterized in that** the ABS mechanism (24) includes:
a first ABS mechanism on-off valve (45) which is disposed in the main brake fluid passage (42) to open and close the main brake fluid passage (42);
an ABS mechanism brake fluid passage (25) which connects a portion of the main brake fluid passage (42) closer to the hydraulic pressure supply mechanism (40a) and a portion of the main brake fluid passage (42) closer to the braking force generating mechanism (35) than a portion of the main brake fluid passage (42) where the first ABS mechanism on-off valve (45) is disposed with each other;
a brake fluid pump (49) which is disposed in the ABS mechanism brake fluid passage (25) to send brake fluid on the side of the braking force generating mechanism (35) toward the hydraulic pressure supply mechanism (40a); and
a second ABS mechanism on-off valve (48) which is disposed in the ABS mechanism brake fluid passage (25) to open and close the ABS mechanism brake fluid passage (25), and
the control unit (28) drives the brake fluid pump (49), closes the first ABS mechanism on-off valve (45), and opens the second ABS mechanism on-off valve (48), thereby reducing hydraulic pressure supplied to the braking force generating mechanism (35) when the locked state of the wheel (17) is detected, and
adjusts openings of the first and the second ABS mechanism on-off valves (45, 48), thereby increasing hydraulic pressure supplied to the braking force generating mechanism (35) when the locked state of the wheel (17) is released during driving of the ABS mechanism (24).

8. A braking system (30) for a motorcycle according to claim 7, **characterized in that**, when the locked state of the wheel (17) is released during driving of the ABS mechanism (24),
the control unit (28) increases hydraulic pressure supplied to the braking force generating mechanism (35) at the first pressure-increase speed if the wheel acceleration obtained by differentiating the rotation speed of the wheel (17) with respect to time is smaller than a predetermined acceleration,
increases hydraulic pressure supplied to the braking force generating mechanism (35) at the second pressure-increase speed which is higher than the first pressure-increase speed if the wheel acceleration is equal to or higher than the predetermined acceleration and the operation amount of the operation member (18) is greater than the predetermined operation amount, and
immediately opens the first ABS mechanism on-off valve (45) and closes the second ABS mechanism on-off valve (48) if the wheel acceleration is equal to or higher than the predetermined acceleration and the operation amount of the operation member (18) is equal to or less than the predetermined operation amount.

9. A motorcycle or any other type of straddle-type vehicle having a plurality of wheels including a front wheel (15) and a rear wheel (17), and a braking system (30) according to at least one of the claims 1 to 8, wherein the braking force generating mechanism (35) is provided to the rear wheel (17) of the motorcycle.

10. A motorcycle or any other type of straddle-type vehicle according to claim 9 having a braking system (30) according to claim 2,
**characterized in that**
the vehicle speed detection section (27) includes:
a front wheel rotation speed detection section (27a) which detects a rotation speed of the front wheel (15), and
a rear wheel rotation speed detection section (27b) which detects a rotation speed of the rear wheel (17), and
the wheel rotation speed detection section (27) is the front wheel rotation speed detection section (27a) or the rear wheel rotation speed detection section (27b).

## Patentansprüche

1. Bremssystem (30) für ein Motorrad oder irgendeinen anderen Typ von Fahrzeugen vom Grätschsitz- Typ, wobei das Bremssystem (30) enthält:
eine Hydraulikdruck- Zuführungsvorrichtung (40a), die einen Hydraulikdruck zuführt;
eine Bremskrafterzeugungsvorrichtung (35), die eine Bremskraft erzeugt, wenn Hydraulikdruck von der Hydraulikdruck- Zuführungsvorrichtung (40a) zugeführt wird;
ein Betätigungsteil (18) zum Betätigen der Hydraulikdruck- Zuführungsvorrichtung (40a);
eine ABS- Vorrichtung (24), die den Hydraulikdruck, zugeführt zu der Bremskrafterzeugungsvorrichtung (35), reduziert;
einen blockierter Zustand- Erfassungsabschnitt, der einen blockierten Zustand eines Rades (17) des Motorrades erfasst;
einen Betätigungsbetrag- Erfassungsabschnitt (43), der einen Betätigungsbetrag des Betätigungsteils (18) erfasst; und
eine Steuereinheit (28), die die ABS- Vorrichtung (24) veranlasst, den Hydraulikdruck, zugeführt zu der Bremskrafterzeugungsvorrichtung (35), zu reduzieren,
wenn der blockierte Zustand des Rades (17) erfasst wird, und der die ABS- Vorrichtung (24) veranlasst, den Hydraulikdruck, zugeführt zu der Bremskrafterzeugungsvorrichtung (35), zu erhöhen, wenn der blockierte Zustand des Rades (17) während des Antreibens der ABS- Vorrichtung (24) gelöst wird,
wobei das Bremssystem **dadurch gekennzeichnet ist, dass**,
wenn der Betätigungsbetrag des Betätigungsteils (18) gleich zu oder kleiner als ein vorbestimmter Betätigungsbetrag ist, wenn der blockierte Zustand des Rades (17) während des Antreibens der ABS- Vorrichtung (24) gelöst wird, die Steuereinheit (28)den Hydraulikdruck, zugeführt zu der Bremskrafterzeugungsvorrichtung (35), mit einer höheren Druckerhöhungsgeschwindigkeit als diejenige erhöht, wenn der Betätigungsbetrag des Betätigungsteils (18) größer als der vorbestimmte Betätigungsbetrag ist.

2. Bremssystem (30) für ein Motorrad nach Anspruch 1, **dadurch gekennzeichnet, dass** der blockierter Zustand- Erfassungsabschnitt enthält:
einen Fahrzeuggeschwindigkeits- Erfassungsabschnitt (27), der eine Fahrzeuggeschwindigkeit des Motorrades erfasst; und
einen Raddrehzahl- Erfassungsabschnitt (27b), der eine Drehzahl des Rades (17) erfasst, und
die Steuereinheit (28) feststellt, dass der blockierte Zustand des Rades (17) gelöst ist, wenn eine Differenz zwischen der Fahrzeuggeschwindigkeit des Motorrades und die Drehzahl des Rades (17) gleich zu oder kleiner als eine vorbestimmte Drehzahldifferenz während des Antreibens der ABS- Vorrichtung (24) wird.

3. Bremssystem (30) für ein Motorrad nach Anspruch 2, **dadurch gekennzeichnet, dass** die Steuereinheit (28) feststellt, dass der blockierte Zustand des Rades (17) gelöst ist, wenn die Differenz zwischen der Fahrzeuggeschwindigkeit des Motorrades und der Drehzahl des Rades (17) gleich zu oder kleiner als die vorbestimmte Geschwindigkeitsdifferenz wird, und wenn eine Radbeschleunigung, erhalten durch Differenzieren der Drehzahl des Rades (17) in Bezug auf die Zeit während des Antreibens der ABS- Vorrichtung (24) gleich oder größer als die vorbestimmte Beschleunigung wird.

4. Bremssystem (30) für ein Motorrad nach Anspruch 2, **dadurch gekennzeichnet, dass**, wenn der blockierte Zustand des Rades (17) während des Antreibens der ABS- Vorrichtung (24) gelöst ist,
die Steuereinheit (28) den Hydraulikdruck, zugeführt zu der Bremskrafterzeugungsvorrichtung (35), mit einer ersten Druckerhöhungsgeschwindigkeit erhöht, wenn die Radbeschleunigung, erhalten durch Differenzieren der Drehzahl des Rades (17) in Bezug auf die Zeit, kleiner als eine vorbestimmte Beschleunigung ist,
den Hydraulikdruck, zugeführt zu der Bremskrafterzeugungsvorrichtung (35) mit einer zweiten Druckerhöhungsgeschwindigkeit, die höher als die erste Druckerhöhungsgeschwindigkeit ist, erhöht, wenn die Radbeschleunigung gleich zu oder höher als die vorbestimmte Beschleunigung ist und der Betätigungsbetrag des Betätigungsteils (18) größer als der vorbestimmte Betätigungsbetrag ist, und den Hydraulikdruck, zugeführt zu der Bremskrafterzeugungsvorrichtung (35) mit einer dritten Druckerhöhungsgeschwindigkeit, die höher als die zweite Druckerhöhungsgeschwindigkeit ist, erhöht, wenn die Radbeschleunigung gleich zu oder höher als die vorbestimmte Beschleunigung ist und der Betätigungsbetrag des Betätigungsteils (18) gleich zu oder kleiner als der vorbestimmte Betätigungsbetrag ist.

5. Bremssystem (30) für ein Motorrad nach einem der Ansprüche 1 bis 3, **gekennzeichnet durch** einen Hauptbrems- Fluidkanal (42), der die Hydraulikdruck- Zuführungsvorrichtung (40a) und die Bremskrafterzeugungsvorrichtung (35) miteinander verbindet.

6. Bremssystem (30) für ein Motorrad nach Anspruch 5, **dadurch gekennzeichnet, dass** der Betätigungsbetragerfassungsabschnitt ein Hydraulikdruck- Erfassungsabschnitt (43) ist, der den Hydraulikdruck in dem Hauptbrems- Fluidkanal (42) erfasst, und die Steuereinheit (28) bestimmt, dass der Betätigungsbetrag des Betätigungsteils (18) gleich zu oder kleiner als der vorbestimmte Betätigungsbetrag ist, wenn der Hydraulikdruck, erfasst durch den Hydraulikdruck- Erfassungsabschnitt (43), gleich zu oder kleiner als ein vorbestimmter Hydraulikdruck ist, und Bestimmt, dass der Betätigungsbetrag des Betätigungsteils (18) größer als der vorbestimmte Betätigungsbetrag ist, wenn der Hydraulikdruck, erfasst durch den Hydraulikdruck- Erfassungsabschnitt (43), größer als der Hydraulikdruck ist.

7. Bremssystem (30) für ein Motorrad nach Anspruch 5 oder 6, **dadurch gekennzeichnet, dass** die ABS- Vorrichtung (24) enthält:
eine erstes ABS- Vorrichtungs- Ein- Aus- Ventil (45), das in dem Hauptbrems-Fluidkanal (42) angeordnet ist, um den Hauptbrems- Fluidkanal (42) zu öffnen oder schließen;
einen ABS- Vorrichtungs- Hauptbrems- Fluidkanal (25), der einen Abschnitt des Hauptbrems- Fluidkanals (42), näher zu der Hydraulikdruck- Zuführungsvorrichtung (40a), und einen Abschnitt des Hauptbrems- Fluidkanals (42), näher zu der Bremskrafterzeugungsvorrichtung (35) als einen Abschnitt des Hauptbrems- Fluidkanals (42), wo das erste ABS- Vorrichtungs- Ein- Aus- Ventil (45) angeordnet ist, miteinander verbindet;
eine Bremsfluid- Pumpe (49), die in dem ABS- Vorrichtung - Bremsfluid- Kanal (25) angeordnet ist, um Bremsfluid auf die Seite der Bremskrafterzeugungsvorrichtung (35) in Richtung zu der Hydraulikdruck- Zuführungsvorrichtung (40a) zu senden; und
ein zweites ABS- Vorrichtungs- Ein- Aus- Ventil (48), das in dem ABS- Vorrichtung- Bremsfluid- Kanal (25) angeordnet ist, um den ABS- Vorrichtung - Bremsfluid- Kanal (25) zu öffnen oder zu schließen, und
wobei die Steuereinheit (28) die Bremsfluid- Pumpe (49) antreibt, das erste ABS-Vorrichtungs- Ein- Aus- Ventil (45) schließt und das zweite ABS- Vorrichtungs-Ein- Aus- Ventil (48) öffnet, um dadurch den Hydraulikdruck, zugeführt zu der Bremskrafterzeugungsvorrichtung (35), zu reduzieren, wenn der blockierte Zustand des Rades (17) erfasst wird, und
die Öffnungen des ersten und zweiten ABS- Vorrichtungs- Ein- Aus- Ventiles (45, 48) einstellt, um dadurch den Hydraulikdruck, zugeführt zu der Bremskrafterzeugungsvorrichtung (35), zu erhöhen, wenn der blockierte Zustand des Rades (17) während des Antreibens der ABS- Vorrichtung (24) gelöst wird.

8. Bremssystem (30) für ein Motorrad nach Anspruch 7, **dadurch gekennzeichnet, dass** wenn der blockierte Zustand des Rades (17) während des Antreibens der ABS- Vorrichtung (24) gelöst wird,
die Steuereinheit (28) den Hydraulikdruck, zugeführt zu der Bremskrafterzeugungsvorrichtung (35), auf die erste Druckerhöhungsdrehzahl erhöht, wenn die Radbeschleunigung, erhalten durch Differenzieren der Drehzahl des Rades (17) in Bezug auf die Zeit kleiner als eine vorbestimmte Beschleunigung ist,
den Hydraulikdruck, zugeführt zu der Bremskrafterzeugungsvorrichtung (35), auf die weite Druckerhöhungsdrehzahl erhöht, die höher als die erste Druckerhöhungsdrehzahl ist, wenn die Radbeschleunigung gleich zu oder höher als die vorbestimmte Beschleunigung ist und der Betätigungsbetrag des Betätigungsteils (18) größer als der vorbestimmte Betätigungsbetrag ist, und
sofort das erste ABS- Vorrichtungs- Ein- Aus- Ventil (45) öffnet und das zweite ABS- Vorrichtungs- Ein- Aus- Ventil (45) schließt, wenn die Radbeschleunigung gleich zu oder höher als die vorbestimmte Beschleunigung ist und der Betätigungsbetrag des Betätigungsteils (18) gleich zu oder kleiner als der vorbestimmte Betätigungsbetrag ist.

9. Motorrad oder ein anderer Typ von Fahrzeugen vom Grätschsitz- Typ, mit einer Mehrzahl von Rädern, enthaltend ein Vorderrad (15) und ein Hinterrad (17) und einem Bremssystem (30) nach zumindest einem der Ansprüche 1 bis 8, wobei die Bremskrafterzeugungsvorrichtung (35) an dem Hinterrad (17) des Motorrades vorgesehen ist.

10. Motorrad oder ein anderer Typ von Fahrzeugen vom Grätschsitz- Typ nach Anspruch 9, mit einem Bremssystem (30) nach Anspruch 2, **dadurch gekennzeichnet, dass**
der Fahrzeuggeschwindigkeits- Erfassungsabschnitt (27) enthält:
einen Vorderraddrehzahl- Erfassungsabschnitt (27a), der eine Drehzahl des Vorderrades (15) erfasst; und
einen Hinterraddrehzahl- Erfassungsabschnitt (27b), der eine Drehzahl des Hinterrades (17) erfasst; und der Fahrzeuggeschwindigkeits- Erfassungsabschnitt (27) der Vorderraddrehzahl- Erfassungsabschnitt (27a) oder der Hinterraddrehzahl- Erfassungsabschnitt (27b) ist.

## Revendications

1. Système de freinage (30) pour un motocycle ou tout autre type de véhicule du type à enfourcher, le système de freinage (30) comprenant :
un mécanisme d'alimentation en pression hydraulique (40a) qui fournit une pression hydraulique ;
un mécanisme générateur de force de freinage (35) qui génère une force de freinage quand une pression hydraulique est fournie à partir du mécanisme d'alimentation en pression hydraulique (40a) ;
un organe d'actionnement (18) pour actionner le mécanisme d'alimentation en pression hydraulique (40a) ;
un mécanisme ABS (24) qui réduit la pression hydraulique fournie au mécanisme générateur de force de freinage (35) ;
une section de détection d'état bloqué qui détecte un état bloqué d'une roue (17) du motocycle ;
une section de détection de degré d'actionnement (43) qui détecte un degré d'actionnement de l'organe d'actionnement (18) ; et
une unité de commande (28) qui amène le mécanisme ABS (24) à réduire la pression hydraulique fournie au mécanisme générateur de force de freinage (35) quand l'état bloqué de la roue (17) est détecté, et qui amène le mécanisme ABS (24) à augmenter la pression hydraulique fournie au mécanisme générateur de force de freinage (35) quand l'état bloqué de la roue (17) est relâché pendant le fonctionnement du mécanisme ABS (24),
le système de freinage étant **caractérisé en ce que** si le degré d'actionnement de l'organe d'actionnement (18) est égal ou inférieur à un degré d'actionnement prédéterminé, quand l'état bloqué de la roue (17) est relâché pendant le fonctionnement du mécanisme ABS (24), l'unité de commande (28) augmente la pression hydraulique fournie au mécanisme générateur de force de freinage (35) à une plus grande vitesse d'augmentation de pression que lorsque le degré d'actionnement de l'organe d'actionnement (18) est supérieur au degré d'actionnement prédéterminé.

2. Système de freinage (30) pour un motocycle selon la revendication 1, **caractérisé en ce que** la section de détection d'état bloqué comprend :
une section de détection de vitesse de véhicule (27) qui détecte une vitesse de véhicule du motocycle ; et
une section de détection de vitesse de rotation de roue (27b) qui détecte une vitesse de rotation de la roue (17), et
l'unité de commande (28) détermine que l'état bloqué de la roue (17) est relâché quand une différence entre la vitesse de véhicule du motocycle et la vitesse de rotation de la roue (17) devient égale ou inférieure à une différence de vitesse prédéterminée, pendant le fonctionnement du mécanisme ABS (24).

3. Système de freinage (30) pour un motocycle selon la revendication 2, **caractérisé en ce que** l'unité de commande (28) détermine que l'état bloqué de la roue (17) est relâché quand la différence entre la vitesse de véhicule du motocycle et la vitesse de rotation de la roue (17) devient égale ou inférieure à la différence de vitesse prédéterminée et quand une accélération de roue obtenue grâce à la différentiation de la vitesse de rotation de la roue (17) par rapport au temps devient égale ou supérieure à l'accélération prédéterminée, pendant le fonctionnement du mécanisme ABS.

4. Système de freinage (30) pour un motocycle selon la revendication 3, **caractérisé en ce que** lorsque l'état bloqué de la roue (17) est relâché pendant le fonctionnement du mécanisme ABS (24),
l'unité de commande (28) augmente la pression hydraulique fournie au mécanisme générateur de force de freinage (35) à une première vitesse d'augmentation de pression si l'accélération obtenue grâce à la différentiation de la vitesse de rotation de la roue (17) par rapport au temps est inférieure à une accélération prédéterminée,
augmente la pression hydraulique fournie au mécanisme générateur de force de freinage (35) à une deuxième vitesse d'augmentation de pression, qui est supérieure à la première vitesse d'augmentation de pression, si l'accélération de roue est égale ou supérieure à l'accélération prédéterminée et si le degré d'actionnement de l'organe d'actionnement (18) est supérieur au degré d'actionnement prédéterminé, et
augmente la pression hydraulique fournie au mécanisme générateur de force de freinage (35) à une troisième vitesse d'augmentation de pression, qui est supérieure à la deuxième vitesse d'augmentation de pression, si l'accélération de roue est égale ou supérieure à l'accélération prédéterminée et si le degré d'actionnement de l'organe d'actionnement (18) est égal ou inférieur au degré d'actionnement prédéterminé.

5. Système de freinage (30) pour un motocycle selon l'une quelconque des revendications 1 à 3, **caractérisé par** un passage de fluide de frein principal (42) qui relie le mécanisme d'alimentation en pression hydraulique (40a) et le mécanisme générateur de force de freinage (35).

6. Système de freinage (30) pour un motocycle selon la revendication 5, **caractérisé en ce que** la section de détection de degré d'actionnement est une section de détection de pression hydraulique (43) qui détecte la pression hydraulique dans le passage de fluide de frein principal (42), et
l'unité de commande (28) détermine que le degré d'actionnement de l'organe d'actionnement (18) est égal ou inférieur au degré d'actionnement prédéterminé, quand la pression hydraulique détectée par la section de détection de pression hydraulique (43) est égale ou inférieure à une pression hydraulique prédéterminée, et
détermine que le degré d'actionnement de l'organe d'actionnement (18) est supérieur au degré d'actionnement prédéterminé, quand la pression hydraulique détectée par la section de détection de pression hydraulique (43) est supérieure à la pression hydraulique prédéterminée.

7. Système de freinage (30) pour un motocycle selon la revendication 5 ou 6, **caractérisé en ce que** le mécanisme ABS (24) comprend :
une première soupape marche-arrêt de mécanisme ABS (45) qui est disposée dans le passage de fluide de frein principal (42) pour ouvrir et fermer le passage de fluide de frein principal (42) ;
un passage de fluide de frein de mécanisme ABS (25) qui relie une partie du passage de fluide de frein principal (42) plus proche du mécanisme d'alimentation en pression hydraulique (40a) et une partie du passage de fluide de frein principal (42) plus proche du mécanisme générateur de force de freinage (35) qu'une partie du passage de fluide de frein principal où la première soupape marche-arrêt de mécanisme ABS (45) est disposée ;
une pompe de fluide de frein (49) qui est disposée dans le passage de fluide de frein de mécanisme ABS (25) pour envoyer le fluide de frein sur le côté du mécanisme générateur de force de freinage (35) vers le mécanisme d'alimentation en pression hydraulique (40a) ; et
une seconde soupape marche-arrêt de mécanisme ABS (48) qui est disposée dans le passage de fluide de frein de mécanisme ABS (25) pour ouvrir et fermer celui-ci, et
l'unité de commande (28) entraîne la pompe de fluide de frein (49), ferme la soupape marche-arrêt de mécanisme ABS (45) et ouvre la seconde soupape marche-arrêt de mécanisme ABS (48), réduisant ainsi la pression hydraulique fournie au mécanisme générateur de force de freinage (35) quand l'état bloqué de la roue (17) est détecté, et
règle les ouvertures des première et seconde soupapes marche-arrêt de mécanisme ABS (45, 48), augmentant ainsi la pression hydraulique fournie au mécanisme générateur de force de freinage (35) quand l'état bloqué de la roue (17) est relâché pendant l'entraînement du mécanisme ABS (24).

8. Système de freinage (30) pour un motocycle selon la revendication 7, **caractérisé en ce que** lorsque l'état bloqué de la roue (17) est relâché pendant l'entraînement du mécanisme ABS (24),
l'unité de commande (28) augmente la pression hydraulique fournie au mécanisme générateur de force de freinage (35) à la première vitesse d'augmentation de pression si l'accélération de roue obtenue grâce à la différentiation de la vitesse de rotation de la roue (17) par rapport au temps est inférieure à une accélération prédéterminée,
augmente la pression hydraulique fournie au mécanisme générateur de force de freinage (35) à la deuxième vitesse d'augmentation de pression, qui est supérieure à la première vitesse d'augmentation de pression, si l'accélération de roue est égale ou supérieure à l'accélération prédéterminée et si le degré d'actionnement de l'organe d'actionnement (18) est supérieur au degré d'actionnement prédéterminé, et
ouvre immédiatement la soupape marche-arrêt de mécanisme ABS (45) et ferme la seconde soupape marche-arrêt de mécanisme ABS (48) si l'accélération de roue est égale ou supérieure à l'accélération prédéterminée et si le degré d'actionnement de l'organe d'actionnement (18) est égal ou inférieur au degré d'actionnement prédéterminé.

9. Motocycle ou tout autre type de véhicule du type à enfourcher comportant plusieurs roues, comprenant une roue avant (15) et une roue arrière (17), et un système de freinage (30) selon l'une au moins des revendications 1 à 8, étant précisé que le mécanisme générateur de force de freinage (35) est prévu sur la roue arrière (17) du motocycle.

10. Motocycle ou tout autre type de véhicule du type à enfourcher, selon la revendication 9, comportant un système de freinage (30) selon la revendication 1, **caractérisé en ce que** la section de détection de vitesse de véhicule (27) comprend :
une section de détection de vitesse de rotation de roue avant (27a) qui détecte une vitesse de rotation de la roue avant (15) ; et
une section de détection de vitesse de rotation de roue arrière (27b) qui détecte une vitesse de rotation de la roue arrière (17), et
la section de détection de vitesse de rotation de roue (27) est constituée par la section de détection de vitesse de rotation de roue avant (27a) ou par la section de détection de vitesse de rotation de roue arrière (27b).
